(19) Europäisches Patentamt
European Patent Office
Office européen des brevets

(11) **EP 3 707 486 B1**

(12) **EUROPÄISCHE PATENTSCHRIFT**

(45) Veröffentlichungstag und Bekanntmachung des Hinweises auf die Patenterteilung:
**22.02.2023   Patentblatt 2023/08**

(21) Anmeldenummer: **18793398.1**

(22) Anmeldetag: **23.10.2018**

(51) Internationale Patentklassifikation (IPC):
**F03D 17/00** (2016.01)     **G01P 21/02** (2006.01)
**G01L 3/10** (2006.01)     **G01P 3/48** (2006.01)
**G01L 3/12** (2006.01)     **G01L 25/00** (2006.01)

(52) Gemeinsame Patentklassifikation (CPC):
**F03D 17/00; G01L 3/10; G01L 3/12; G01L 25/003; G01P 3/48; G01P 21/02; F05B 2240/40;** F05B 2270/335; F05B 2270/809; Y02E 10/72

(86) Internationale Anmeldenummer:
**PCT/EP2018/079072**

(87) Internationale Veröffentlichungsnummer:
**WO 2019/091777 (16.05.2019 Gazette 2019/20)**

(54) **VERFAHREN UND VORRICHTUNG ZUR DREHMOMENTMESSUNG IM ANTRIEBSSTRANG EINER WINDENERGIEANLAGE**

METHOD AND DEVICE FOR TORQUE MEASUREMENT IN THE POWER TRANSMISSION OF A WIND ENERGY SYSTEM

PROCÉDÉ ET DISPOSITIF DE MESURE DE COUPLE DANS LA TRANSMISSION DE PUISSANCE D'UN SYSTÈME D'ÉNERGIE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2017   DE 102017219886**

(43) Veröffentlichungstag der Anmeldung:
**16.09.2020   Patentblatt 2020/38**

(73) Patentinhaber: **Fraunhofer-Gesellschaft zur Förderung
der angewandten Forschung e.V.
80686 München (DE)**

(72) Erfinder:
• **WENSKE, Jan
21449 Radbruch (DE)**
• **ZHANG, Hongkun
27568 Bremerhaven (DE)**

(74) Vertreter: **Pfenning, Meinig & Partner mbB
Patent- und Rechtsanwälte
Joachimsthaler Straße 10-12
10719 Berlin (DE)**

(56) Entgegenhaltungen:
EP-A2- 2 072 984         WO-A1-2017/000949
US-A1- 2012 067 138

• **S. E. Beladi: "Experiment Two (2) Torsional testing of Circular Shafts", Mechanics of Materials Lab, 6. Februar 2015 (2015-02-06), XP055549553, Gefunden im Internet: URL:http://web.eng.fiu.edu/munroen/Classes/3.%20LAb%20Manual%20for%20Torsion%20Exper iment%20Two.pdf [gefunden am 2019-01-30]**

**Beschreibung**

Die Erfindung betrifft ein Verfahren zur Drehmomentmessung in einem Antriebsstrang, vorzugsweise in einem Antriebsstrang einer Windenergieanlage. Außerdem betrifft die Erfindung eine Vorrichtung zur Drehmomentmessung in einem Antriebsstrang, vorzugsweise in einem Antriebsstrang einer Windenergieanlage.

Im Stand der Technik sind Verfahren zur Drehmomentmessung in einem Antriebsstrang einer Windenergieanlage bekannt. Die WO 2017/000 949 A1 beschreibt beispielsweise ein Verfahren, das anhand einer Verwindung das auf den Antriebsstrang wirkende Drehmoment ermittelt. Diesem Verfahren liegt die Überlegung zugrunde, dass sich eine Welle durch ein Aufbringen eines Drehmoments verdrillt und diese Verwindung damit ein direktes Maß für das aufgebrachte Drehmoment darstellt. Zum Ermitteln der Verwindung werden zwei Sensoren, die eine Rotationsgeschwindigkeit der Welle messen, an zwei unterschiedlichen Positionen auf dem Antriebsstrang positioniert. Die Sensoren liefern als Ausgangssignal die Rotationsgeschwindigkeiten in Form von Frequenzen. Die Ausgangssignale der zwei Sensoren werden überlagert, sodass ein drittes Signal generiert wird, dass von der ersten und der zweiten Rotationsgeschwindigkeit abhängig ist. Durch eine Änderung des auf den Antriebsstrang wirkenden Drehmoments wird der Antriebsstrang verdrillt. Bei einer Windenergieanlage und einem durch Wind auf die Rotorblätter aufgebrachten Drehmoment verdrillt sich dabei beispielsweise die Rotorhauptwelle, auf der einer der Sensoren angeordnet ist, sodass sich das Ausgangssignal des einen Sensors und damit das dritte Signal verändert. Die Deformation der Rotorhauptwelle ist proportional zu dem auf die Welle wirkenden Drehmoment, sodass durch einen Vergleich des dritten Signals mit einem Referenzwert auf das Drehmoment geschlossen werden kann. Das so ermittelte Drehmoment ist für eine Regelung der Windenergieanlage zur Lastminimierung, zum Optimieren des Energieantrags und/oder zur aktiven Schwingungsdämpfung in Windenergieanlagen meist zu ungenau.

Die DE 10 2013 227 055 A1 betrifft ein Verfahren zum Bestimmen einer Drehwinkelstellung und einer Drehzahl einer Welle eines Antriebsstrangs, wobei wenigstens zwei Sensoren in umfänglicher Richtung an der Welle angeordnet sind und einen die Rotation charakterisierenden Messwert erfassen. Aus den Messwerten wird die Drehwinkelstellung bestimmt, wobei bei der Bestimmung ein Abstand der zwei Sensoren berücksichtigt wird und aus dem Drehwinkel das Drehmoment ermittelt wird.

Weitere erfindungsrelevante Dokumente sind Patentdokumente EP 2 072 984 A2, US 2012/067138 A1 und WO 2017/000949 A1 und die wissenschaftliche Veröffentlichung S.E. Beladi: "Experiment Two (2) Torsional testing of Circular Shafts",Mechanics of Materials Lab (2015-02-06).

Angesichts dieses Standes der Technik liegt der vorliegenden Erfindung die Aufgabe zugrunde, ein Verfahren vorzuschlagen, das vergleichsweise kostengünstig ist und eine Genauigkeit von Drehmomentmessungen verbessert. Ferner liegt der Erfindung die Aufgabe zugrunde eine Vorrichtung zum Durchführen eben dieses Verfahrens vorzuschlagen.

Gelöst wird diese Aufgabe durch ein Verfahren mit den Merkmalen des Anspruchs 1 sowie durch eine Vorrichtung gemäß dem nebengeordneten Anspruch. Vorteilhafte Weiterbildungen ergeben sich mit den Merkmalen der abhängigen Ansprüche und des Ausführungsbeispiels.

Das erfindungsgemäße Verfahren eignet sich zur Drehmomentmessung in einem Antriebsstrang, insbesondere in einem Antriebsstrang einer Windenergieanlage. Zumindest zwei Inkrementalgeber sind an zwei unterschiedlichen Positionen auf zumindest einer Welle des Antriebsstrangs, beispielsweise auf einer Rotorhauptwelle einer Windenergieanlage, positioniert und liefern bei einer Drehbewegung der Welle jeweils periodische Drehsignale. Die Drehsignale können dabei beispielsweise als Rechtecksignale oder auch als Sinussignale vorliegen. Die Phasen der Drehsignale werden zur Feststellung einer Phasenverschiebung zwischen den Drehsignalen der beiden Inkrementalgeber ausgewertet. Aus der Phasenverschiebung wird ein Drehmoment der Welle ermittelt.

Die ausgewertete Phasenverschiebung wird in Abhängigkeit einer ersten Nulllastphasenverschiebung und unter Verwendung eines Steifigkeitsfaktors K korrigiert, wobei vor und/oder zwischen den Drehmoment-Messungen eine in-situ-Kalibrierung zum Ermitteln der Nulllastphasenverschiebung und des Steifigkeitsfaktors durchgeführt wird.

Im Rahmen der in-situ-Kalibrierung werden ein erstes Nulllast-Signal des ersten Inkrementalgebers und ein zweites Nulllast-Signal des zweiten Inkrementalgebers über einen ersten Messzeitraum gemessen. Zwischen dem ersten Nulllast-Signal und dem zweiten Nulllast-Signal wird eine zeitlich gemittelte Nulllastphasenverschiebung bestimmt. Während des ersten Messzeitraums wird die Windenergieanlage unterhalb einer Nenndrehzahl betrieben, wobei ein Generatordrehmoment auf Null eingestellt wird.

Ferner umfasst die in-situ-Kalibrierung ein Ermitteln des Steifigkeitsfaktors K. Dafür werden ein erstes Nennlast-Signal des ersten Inkrementalgebers und eins zweites Nennlast-Signal des zweiten Inkrementalgebers über einen zweiten Messzeitraum gemessen. Ein Generatordrehmoment wird bei Nennlast größer Null gehalten. Eine zeitlich gemittelte Nennlastphasenverschiebung wird zwischen dem ersten Nennlast-Signal und dem zweiten Nennlast-Signal bestimmt. In Abhängigkeit der Nennlastphasenverschiebung wird der Steifigkeitsfaktor K ermittelt.

Das vorgeschlagene Verfahren zur Drehmomentmessung hat den Vorteil, dass eine vergleichsweise einfache und kostengünstige Drehmomentmessung im Antriebsstrang durchgeführt werden kann. Ferner ist die Drehmomentmessung durch die in-situ-Kalibrierung hinreichend genau. Eine hinreichende Genauigkeit der Drehmomentmessung kann insbesondere für eine Windenergieanlagen-Regelung vorteilhaft sein und diese verbessern. Eine Windenergieanlagen-Regelung kann beispielsweise zur Lastminimierung innerhalb des mechanischen Antriebsstrangs, zur Optimierung des Energieertrags durch ein verbessertes MPP-Tracking (Maximum-Power-Point-Tracking) im Teillastbereich, zur aktiven Schwingungsdämpfung innerhalb des Antriebsstrangs oder zur genaueren Wirkungsgradbestimmung verwendet werden.

Die festgestellte Phasenverschiebung wird vorzugsweise durch Subtraktion oder Addition der Nulllastphasenverschiebung korrigiert. Die festgestellte Phasenverschiebung kann ferner durch Multiplikation mit dem Steifigkeitsfaktor K korrigiert werden.

Zum Messen der Nennlast-Signale während des zweiten Messzeitraums wird die Windenergieanlage vorzugsweise bei Nennlast d.h. mit einer Nenndrehzahl betrieben wird. Dabei ist die Rotordrehzahl vorzugsweise nahezu konstant, was insbesondere bei geringen Schwankungen der Windgeschwindigkeit gegeben ist. Der Generator ist derart mit der Rotorhauptwelle verbunden, dass eine Drehbewegung der Rotorhauptwelle auf die Generatoreingangswelle übertragen wird. Typischerweise ist ein Getriebe zwischen die Rotorhauptwelle und die Generatoreingangswelle zwischengeschaltet, sodass sich die Drehzahlen der Rotorhauptwelle und der Generatoreingangswelle unterscheiden können. Das Generatordrehmoment entspricht typischerweise einem Luftspaltdrehmoment, d.h. einem inneren Generatordrehmoment zwischen dem Stator und dem Rotor des Generators.

In einer Ausführungsform kann der Generator mittels einer Kupplung mit der Getriebeausgangswelle verbindbar sein, sodass der Generator während des ersten Messzeitraums beispielsweise entkoppelt werden kann und sich das Generatordrehmoment von Null einstellen kann.

In einer weiteren Ausführung kann das Generatordrehmoment von einer Windenergieanlagenbetriebsführung bzw. -regelung während des zweiten Messzeitraums im Wesentlichen konstant gehalten und aufgezeichnet werden. Dafür kann die Rotordrehzahl über die Rotorblattverstellung, auch Pitchregelung genannt, auf eine Anlagennenndrehzahl geregelt werden. Die Pitchregelung kann eine träge Charakteristik haben, sodass die Rotordrehzahl durch dynamische Brems- und Beschleunigungsdrehmomentanteile in einem Bereich zwischen +/- 10 % um die Anlagennenndrehzahl schwankt und eine Schwankung im Generatordrehmoment verursachen kann. Das Generatordrehmoment kann deshalb über den zweiten Messzeitraum gemittelt werden. Das vorzugsweise gemittelte Generatordrehmoment kann zum Ermitteln des Steifigkeitsfaktors K durch die über den zweiten Messzeitraum gemittelte Phasenverschiebung dividiert werden.

Das Generatordrehmoment kann aus Generatorparametern, d.h. dem Luftspaltdrehmoment und der Generatordrehzahl, rechnerisch von einem Umrichter ermittelt werden. Dafür kann dem Umrichter beispielsweise ein Generatordrehzahlsignal von einem der Inkrementalgeber zur Verfügung gestellt werden. Ein Generatordrehzahlsignal kann dem Umrichter auch von einem weiteren Inkrementalgeber übermittelt werden. Dabei ist der weitere Inkrementalgeber vorzugsweise möglichst nah am Generator, vorzugsweise am Generator-Ende der Abtriebsseite angeordnet.

In einer Ausführung betragen der erste und/oder der zweite Messzeitraum mindestens 2 Minuten, vorzugsweise mindestens 4 Minuten, besonders bevorzugt mindestens 5 Minuten. Der erste und/oder der zweite Messzeitraum ist üblicherweise maximal 20 Minuten, bevorzugt maximal 15 Minuten, besonders bevorzugt maximal 10 Minuten lang. So können die Nulllastphasenverschiebung und/oder der Steifigkeitsfaktor K in vergleichsweise kurzer Zeit ermittelt werden. Ferner kann eine ausreichende Genauigkeit der Nulllastphasenverschiebung und/oder des Steifigkeitsfaktors erreicht werden, da über den jeweiligen Messzeitraum mehrere Werte für Nulllastphasenverschiebung und/oder für den Steifigkeitsfaktor K ermittelt und jeweils gemittelt werden können.

In einer Ausführung kann die Windenergieanlage zum Ermitteln der Nulllastphasenverschiebung während der in-situ-Kalibrierung zum Erreichen einer Drehzahl unterhalb einer Nenndrehzahl beispielsweise aus einem Windenergie-Normalbetrieb abgebremst werden. Die Messwerte der zwei Inkrementalgeber können dabei in einem Bereich vorgegebener Drehzahlen, vorzugsweise zwischen 1 und 5 rpm, noch bevorzugter zwischen 1 und 3 rpm, zur Bestimmung der Nulllastphasenverschiebung ausgewertet werden. Im Normalbetrieb ist der Rotor typischerweise so in den Wind gedreht, dass der Wind den Rotor antreibt, damit ein positives Antriebsmoment auf die Rotorhauptwelle wirkt und die Rotorhauptwelle vorzugsweise mit einer Nenndrehzahl bewegt. Über eine Pitchverstellung der Rotorblätter können die Rotorblätter zum Abbremsen der Windenergieanlage in Fahnenstellung gebracht werden, sodass der Wind kein positives Antriebsdrehmoment mehr über den Rotor auf die Rotorhauptwelle aufbringen kann. Typischerweise nimmt die Rotordrehzahl durch ein aerodynamisches Bremsmoment dabei weiter ab. Der Generator kann dabei abgeschaltet werden, beispielsweise durch Entkoppeln der Getriebeausgangswelle und der Generatoreingangswelle, sodass ein Generatormoment gleich Null ist. Alternativ kann auch der Umrichter abgeschaltet werden.

In einer weiteren Ausführung kann die Windenergieanlage zum Erreichen einer Drehzahl unterhalb einer Nenndrehzahl auch aus einem ausgeschalteten Zustand hochgefahren werden. Dabei können die Messwerte der zwei Inkrementalgeber in einem Bereich vorgegebener Drehzahlen vorzugsweise zwischen 1 und 5 rpm, noch bevorzugter zwischen 1 und 3 rpm zur Bestimmung der Nulllastphasenverschiebung ausgewertet werden. Beim Hochfahren der Windenergieanlage werden die Rotorblätter üblicherweise sehr langsam, beispielsweise durch Verdrehen der Rotorblätter um etwa 1° pro Minute, aus einer Fahnenstellung in Richtung einer Nennposition bewegt. Durch ein langsames Verstellen der Rotorblätter von der Fahnenstellung in die Nennposition können Beschleunigungsmomente reduziert werden. Auch beim Hochfahren der Windenergieanlage kann der Generator vorzugsweise abgeschaltet sein, sodass das Generatordrehmoment vorzugsweise gleich Null ist.

Es kann auch vorgesehen sein, eine gemittelte Nulllastphasenverschiebung beim Hochfahren und beim Abbremsen der Windenergieanlage zu ermitteln. Dafür können die Nulllastphasenverschiebung, die nach dem Abbremsen der Windenergieanlage ermittelt wird und die Nulllastphasenverschiebung, die nach dem Hochfahren der Anlage ermittelt wird, gemittelt werden. Dies kann den Vorteil haben, dass die Nulllastverschiebung eine höhere Genauigkeit aufweist. Dies wiederum kann sich auf die Genauigkeit der Drehmomentmesswerte während der Drehmomentmessungen auswirken, da, wie bereits oben erläutert, die Drehmomentmesswerte durch die Nulllastverschiebung korrigiert werden.

Ferner kann es vorteilhaft sein, die Windenergieanlage vor einer in-situ-Kalibrierung hochzufahren und über einen gewissen Zeitraum, beispielsweise mindestens 30 Minuten lang, ohne Drehmomentmessungen zu betreiben, sodass der Antriebsstrang der Windenergieanlage warmläuft und seine Nenntemperatur erreicht hat.

In einer Ausführungsform können die Inkrementalgeber auf zwei verschiedenen Wellen angeordnet sein. Die Wellen können durch ein Getriebe miteinander gekoppelt sein. Das Übersetzungsverhältnis des Getriebes ist vorzugsweise konstant. Typischerweise ist einer der Inkrementalgeber, nachfolgend als erster Inkrementalgeber bezeichnet, auf der Rotorhauptwelle der Windenergieanlage angeordnet. Besonders bevorzugt ist der erste Inkrementalgeber nahe dem Rotor angeordnet. Die Rotorhauptwelle kann dabei insbesondere die Getriebeeingangswelle sein. Typischerweise ist der andere der Inkrementalgeber, nachfolgend als zweiter Inkrementalgeber bezeichnet, auf einer Getriebeausgangswelle angeordnet. Alternativ kann der zweite Inkrementalgeber ebenfalls auf der Rotorhauptwelle angeordnet sein. Der zweite Inkrementalgeber ist vorzugsweise zum ersten Inkrementalgeber mit Abstand angeordnet, wobei der Abstand auch abhängig von den Abmessungen der Welle ist. Er kann beispielsweise zwischen 50 cm und 300 cm betragen. Dies hat den Vorteil, dass die Genauigkeit zur Erfassung des Drehmoments verbessert wird. Bei einer Bestimmung des Steifigkeitsfaktors K ist vorzugsweise das Übersetzungsverhältnis des Getriebes zu berücksichtigen. Insbesondere kann dazu bei einer Anordnung des ersten und des zweiten Inkrementalgebers auf der Rotorhauptwelle das ermittelte Drehmoment mit dem Übersetzungsverhältnis des Getriebes multipliziert werden.

In einer beispielhaften Ausführung können die Inkrementalgeber auf bekannten optischen, induktiven oder magnetischen Messprinzipien beruhen. Derartige Inkrementalgeber umfassen typischerweise einen Geber und eine Geberscheibe, die eine hohe Robustheit gegenüber statischen und dynamischen Verlagerungen zwischen dem Geber und der Geberscheibe aufweisen. So können Messfehler oder Sensorausfälle reduziert bzw. vermieden werden. Die Geberscheibe kann, insbesondere bei der Anwendung auf einer Welle, auch als Geberband oder Geberring ausgebildet sein.

In einer weiteren Ausführung können die Inkrementalgeber eine Auflösung von mindestens vier Impulsen, vorzugsweise mindestens 16 Impulsen und/oder maximal 16384 Impulsen, besonders bevorzugt maximal 4096 Impulsen pro Wellenumdrehung aufweisen. Dies hat den Vorteil, dass Standardinkrementalgeber verwendet werden können, die vergleichsweise kostengünstig gegenüber hochauflösenden Inkrementalgebern mit Auflösungen von mehr als 16384 Impulsen pro Wellenumdrehung sind. Ferner können Standardinkrementalgeber den Vorteil haben, dass sie vergleichsweise robust gegenüber Stößen und Laständerungen sind. Vorzugsweise erfolgt die Wahl der Impulse auf den Geberscheiben bzw. Geberringen derart, dass sich über den jeweiligen Wellenumfang eine gleichmäßige, d.h. lückenlose Verteilung der Impulse ergibt. Dies ist insbesondere dann vorteilhaft, wenn die Inkrementalgeber an Positionen angeordnet sind, an denen sich die Wellendurchmesser unterscheiden. Durch eine gleichmäßige Impuls-Verteilung können die Phasen der Inkrementalgeber einfacher verglichen werden und eine Änderung der Phasenverschiebung ist vergleichsweise einfach bestimmbar.

Die Impulszahl pro Wellenumdrehung der beiden Inkrementalgeber kann in einer Ausführungsform identisch ausgeführt werden. Die Impulszahl kann auch abhängig vom Einbauort sein. Die Impulszahlen der Inkrementalgeber können sich auch durch ganzzahlige Vielfache voneinander unterscheiden. Dabei kann die Impulszahl pro Wellenumdrehung des Inkrementalgebers auf einer Generatoreingangswelle insbesondere geringer sein als die Impulszahl pro Wellenumdrehung des Inkrementalgebers auf der Rotorhauptwelle, da die Rotorhauptwelle typischerweise deutlich dicker ausgeführt ist. Ein Inkrementalgeber auf der Rotorhauptwelle weist demnach vorzugsweise mindestens 1000 Impulse pro Umdrehung auf, während ein Inkrementalgeber auf der Generatorwelle, die zumeist einen kleineren Umfang hat, geringere Impulszahlen aufweist. Vorzugsweise werden die Signale der beiden Inkrementalgeber derart aufeinander abgestimmt, dass die Impulse synchron erzeugt werden und ein synchrones Pulsmuster entsteht. Die Getriebeübersetzung kann dabei mit eingerechnet werden.

In einer weiteren Ausführung kann der erste und/oder der zweite Inkrementalgeber, vorzugsweise vor einer Drehmomentmessung, derart verstellt werden, dass die Messsignale der Inkrementalgeber eine Phasenverschiebung mit einem vorgegebenen Wert, vorzugsweise von 90°, aufweisen, wenn die Windenergieanlage unterhalb einer Nenndrehzahl betrieben wird und ein Generatordrehmoment gleich Null ist, wobei der erste und/oder der zweite Inkrementalgeber nach deren Anordnung abgeglichen werden, wenn der gewünschte Wert nicht erreicht wurde. Der erste und/oder der zweite Inkrementalgeber können dafür beispielsweise durch eine elektromechanische Verstelleinrichtung verstellt werden. Eine Phasenverschiebung von 90° ist typischerweise vorteilhaft, da derart ein zur Verfügung stehender Messbereich zu gleichen Teilen auf positive und negative Wellenmomente aufgeteilt werden kann.

Ferner betrifft die vorliegende Erfindung eine Vorrichtung zur Drehmomentmessung im Antriebsstrang einer Windenergieanlage, umfassend zumindest zwei Inkrementalgeber, die an zwei unterschiedlichen Positionen auf zumindest einer Welle des Antriebsstrangs positioniert sind und eine Auswerteeinrichtung, die mit den Inkrementalgebern verbunden ist. Die Auswerteeinrichtung ist eingerichtet zum Ermitteln einer Phasenverschiebung aus den Messsignalen der Inkrementalgeber und zum Bestimmen eines Drehmoments der Welle aus der Phasenverschiebung. Ferner ist die Auswerteeinrichtung eingerichtet, die Phasenverschiebung in Abhängigkeit, vorzugsweise durch Addition oder Subtraktion einer Nulllastphasenverschiebung und unter Verwendung eines Steifigkeitsfaktors K, vorzugsweise durch Multiplikation mit dem Steifigkeitsfaktor K, zu korrigieren, und vor und/oder zwischen den Drehmoment-Bestimmungen eine in-situ-Kalibrierung zum Ermitteln der Nulllastphasenverschiebung und des Steifigkeitsfaktors K durchzuführen.

Die Auswerteeinrichtung zum Durchführen der in-situ-Kalibrierung ist eingerichtet ein erstes Nulllast-Signal des ersten Inkrementalgebers und ein zweites Nulllast-Signal des zweiten Inkrementalgebers über einen ersten Messzeitraum zu messen und eine zeitlich gemittelte Nulllastphasenverschiebung zwischen dem ersten Nulllast-Signal und dem zweiten Nulllast-Signal zu bestimmen, wobei die Windenergieanlage während des ersten Messzeitraums unterhalb einer Nenndrehzahl betrieben wird und ein Generatordrehmoment gleich Null ist. Die Auswerteeinrichtung ist ferner eingerichtet ein erstes Nennlast-Signal des ersten Inkrementalgebers und ein zweites Nennlast-Signal des zweiten Inkrementalgebers über einen zweiten Messzeitraum zu messen und eine zeitlich gemittelten Nennlastphasenverschiebung zwischen dem ersten Nennlast-Signal und dem zweiten Nennlast-Signal zu bestimmen und den Steifigkeitsfaktors K in Abhängigkeit der Nennlastphasenverschiebung zu ermitteln, wobei die Windenergieanlage während des zweiten Messzeitraums bei der Nenndrehzahl betrieben wird und das Generatordrehmoment größer Null gehalten wird.

Die erfindungsgemäße Vorrichtung ist vergleichsweise kostengünstig und einfach in bestehende Antriebsstränge integrierbar. Ferner kann mittels der Vorrichtung das oben beschriebene, vorteilhafte Verfahren zur Drehmomentmessung durchgeführt werden.

In einer Ausführung kann die Auswerteeinrichtung eine Logikschaltung zum Ermitteln der Phasenverschiebung zwischen dem ersten und dem zweiten Inkrementalgeber umfassen, beispielsweise eine UND- oder eine ODER-Logikeinheit, einen Korrelator oder eine Phasenregelschleife (PLL, Phase-Locked-Loop).

In einer Ausführungsform kann die Auswerteeinrichtung eine Analysiereinheit, beispielsweise einen Kreuzkorrelator oder ein Phasenmessglied, zur Feststellung der mechanischen Winkelverdrehung zwischen den zwei Inkrementalgebern und damit des Drehmoments umfassen.

In einer Ausführung kann die Auswerteeinrichtung einen flankengesteuerten Timer umfassen. Mittels des flankengesteuerten Timers können Ausgangssignale in einer relativen Impulszeitfläche, d.h. in einem Puls-Pausen-Verhältnis, digital vermessen werden. Dabei startet der Timer typischerweise bei einer steigenden Flanke, stoppt bei einer fallenden Flanke und wird anschließend zurückgesetzt. So kann die Impulsperiode auf einer Zeitbasis eines integrierten Oszillators (interner Taktgeber) vermessen werden. Die Periodendauer der Impulsfolgen kann als Referenzwert dienen und kann ebenfalls über einen Timer oder Impulszähler bestimmt werden.

In einer weiteren Ausführung kann die Auswerteeinrichtung mit den Inkrementalgebern über eine elektrische Leitungsverbindung verbunden sein.

In einer möglichen Ausführung kann die Vorrichtung zur Drehmomentmessung die oben erwähnte elektromechanische Verstelleinrichtung zum Einstellen einer Phasenverschiebung zwischen dem ersten und dem zweiten Inkrementalgeber umfassen. Die elektromechanische Verstelleinrichtung kann vorzugsweise an zumindest einem der Inkrementalgeber ausgebildet sein. Die elektromechanische Verstelleinrichtung kann beispielsweise einen spielfreien, elektromotorischen Linearantrieb, beispielsweise eine Spindel oder einen Kurvenantrieb entlang der Wellenkontur, aufweisen. Mit der Verstelleinrichtung kann der mindestens eine Inkrementalgeber in seiner Position relativ zur Welle, vorzugsweise in tangentialer Richtung zur Welle und/oder entlang eines Umfangs der Welle bewegt werden. Die Inkrementalgeber können automatisch oder tastend manuell eingestellt werden. Vorzugsweise werden die Inkrementalgeber verstellt, während die Windenergieanlage keinen externen Drehmomenten ausgesetzt ist und die Rotorblätter sich in Fahnenstellung befinden. Der zumindest eine Inkrementalgeber kann mechanisch radial oder entlang einer äußeren Kontur der Welle, an der der jeweilige Inkrementalgeber angeordnet ist, derart verstellt werden, dass der gesamte theoretische Messbereich für das Puls-Pausen-Verhältnis abgefahren wird. Anschließend kann der bzw. können die Inkrementalgeber derart verfahren werden, bis das aktuelle Messsignal für das Puls-Pausen-Verhältnis dem Mittelwert bezüglich des minimalen und des maximalen Puls-Pausen-Verhältnisses entspricht. Die Einstellung des Puls-Pausen-Verhältnisses kann im Betrieb beliebig häufig wiederholt werden. Vorzugsweise werden die Puls-Pausen-Verhältnisse der Inkrementalgeber vor der in-situ-Kalibrierung und vor der Drehmomentmessung aufeinander abgestimmt.

Auch die weiteren Merkmale, die in der vorliegenden Anmeldung mit Bezug auf das Verfahren erläutert wurden, können auch Merkmale der Vorrichtung sein. Umgekehrt können Merkmale, die in der vorliegenden Anmeldung mit Bezug auf die Vorrichtung erläutert wurden, auch auf das Verfahren zutreffen.

Ausführungsbeispiele der Erfindung werden nachfolgend anhand von Figuren beschrieben.

Es zeigen:

Fig. 1a     einen Antriebsstrang einer Windenergieanlage in einer schematischen Darstellung,

Fig. 1b     eine Auswerteeinrichtung der Windenergieanlage der Fig. 1a,

Fig. 2     Drehsignale eines ersten Inkrementalgebers und eines zweiten Inkrementalgebers und ein Signal einer Logikauswertung bei einer Drehung ohne Last,

Fig. 3     Drehsignale des ersten Inkrementalgebers und des zweiten Inkrementalgebers und das Signal einer Logikauswertung bei einer Drehung unter Last eines positiv definierten Drehmoments,

Fig. 4     Drehsignale des ersten Inkrementalgebers und des zweiten Inkrementalgebers und das Signal einer Logikauswertung bei einer Drehung unter Last eines negativ definierten Drehmoments,

Fig. 5     eine Verstelleinrichtung zum Verstellen von zumindest einem der beiden Inkrementalgeber.

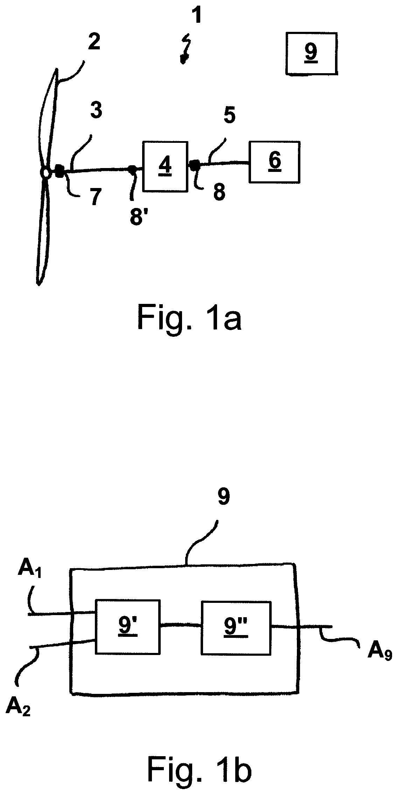

In Figur 1a ist ein Antriebsstrang 1 einer Windenergieanlage schematisch dargestellt. Ein Rotor 2 ist an einer Rotorhauptwelle 3 angeordnet. Die Rotorhauptwelle 3 ist eine Eingangswelle eines Getriebes 4. Das Getriebe 4 weist eine Getriebeausgangswelle 5 auf, die gleichzeitig als Generatoreingangswelle mit einem Generator 6 verbunden ist. Eine Windkraft, die auf den Rotor 2 wirkt, dreht den Rotor und treibt damit die Rotorhauptwelle 3 an. Das Getriebe 4 übersetzt eine langsame Drehbewegung der Rotorhauptwelle 3, in eine schneller drehende Bewegung der Getriebeausgangswelle 5 zur Stromerzeugung im Generator 6. Auf der Rotorhauptwelle 3 ist ein erster Inkrementalgeber 7 angeordnet. Ein Abstand zwischen dem Rotor 2 und dem ersten Inkrementalgeber 7 ist geringer als ein Abstand zwischen dem ersten Inkrementalgeber und dem Getriebe 4. Ein zweiter Inkrementalgeber 8 ist auf der Getriebeausgangswelle 5 angeordnet. Der zweite Inkrementalgeber 8 kann auch auf der Rotorhauptwelle 3 angeordnet sein, beispielsweise an einer Position 8'. Die Position 8' weist einen geringeren Abstand zum Getriebe 4 als zum Rotor 2 auf und beide Inkrementalgeber sollten in diesem Fall mit möglichst großem Abstand angeordnet sein. Die Inkrementalgeber 7 und 8 sind mit einer Auswerteeinrichtung 9 verbunden (die Verbindung ist der Übersichtlichkeit halber in Figur 1 nicht dargestellt). Die Inkrementalgeber 7 und 8 liefern Ausgangssignale in Form von periodischen Drehsignalen. Diese Drehsignale werden über eine elektrische Leitungsverbindung an die Auswerteeinrichtung 9 übermittelt.

Bei einem Normalbetrieb der Windenergieanlage wird der Rotor 2 je nach Windstärke und Windrichtung angetrieben, sodass unterschiedliche und mit der Zeit wechselnde Drehmomente auf die Rotorhauptwelle 3 wirken. Um die Windenergieanlage daran angepasst regeln zu können, wird das jeweilige Drehmoment $M(t)$ benötigt. Die notwendige Drehmomentmessung beruht auf einer direkten Auswertung des relativen Verdrehwinkels zwischen den beiden Inkrementalgebern 7, 8. Die mechanische Winkelverdrehung zwischen beiden Gebern führt zu einer Phasenverschiebung der Geberausgangssignale und bei Überlagerung der Ausgangssignale zu einem Messsignal $A(t)_{mess}$ mit sich änderndem Puls-Pausen-Verhältnis (im Falle von Rechtecksignalen der Inkrementalgeber) als direktes Maß für diese Verdrehung und damit für das wirksame Drehmoment (wird weiter unten genauer erläutert).

Die Figur 1b zeigt die Auswerteeinrichtung 9 der Figur 1a. Die Auswerteeinrichtung umfasst eine Überlagerungs- oder Verknüpfungsschaltung 9', die die Ausgangssignale der Inkrementalgeber 7, 8 als Messsignale $A_1$ und $A_2$ miteinander verknüpft. Diese Verknüpfungsschaltung ist beispielsweise als UND-Logikeinheit ausgebildet. Ein Ausgangssignal der Verknüpfungsschaltung 9'wird an eine Analysiereinheit 9" weitergeleitet, die eine mechanische Winkelverdrehung zwischen den zwei Inkrementalgebern ermittelt und daraus das Drehmoment bestimmt. Ein Ausgangssignal $A_9$ der Auswerteeinrichtung 9 wird an eine Windenergieanlagenregelung weitergeleitet.

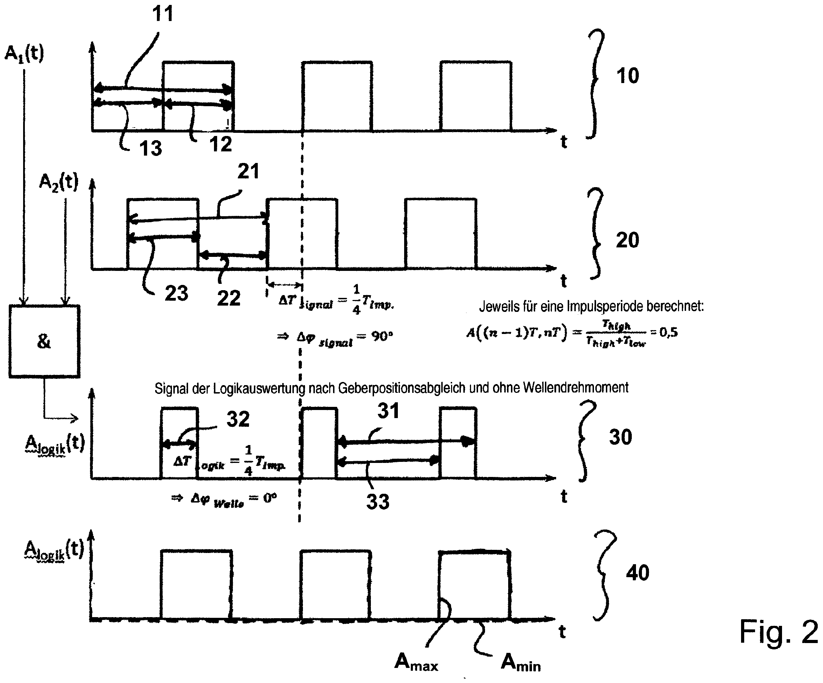

Die Figur 2 zeigt Messsignale bzw. Drehsignale $A_1$ und $A_2$ der zwei Inkrementalgeber 7, 8 bei Drehung ohne Last. Das Drehsignal $A_1$ des ersten Inkrementalgebers 7 ist in einem Diagramm 10 dargestellt und das Drehsignal $A_2$ des zweiten Inkrementalgebers 8 ist in einem Diagramm 20 dargestellt. Das Drehsignal $A_1$ weist eine Impulsperiode 11 bzw. $T_{imp}$ mit einem Puls-Pausen-Verhältnis oder Tastverhältnis von 50 / 50 auf. Dabei ist die Impulsdauer $T_{high}$ 12 genauso lang wie die Pausenzeit $T_{low}$ 13.

Die Impulsperiode ist $T_{imp} = 60/nx$ (s), wobei x die Anzahl der Impulse pro Umdrehung und n die Wellendrehzahl in U/min ist. Das Tastverhältnis ist $TV((n - 1)T, nT) = T_{high} /(T_{high} + T_{low}) = 0,5$.

Das Drehsignal $A_2$ weist eine Impulsperiode 21 auf, die der Impulsperiode 11 entspricht und ebenfalls ein Puls-Pausen-Verhältnis von 50% aufweist. Dabei ist die Pulsdauer 22 genauso lang wie die Pausenzeit 23. Ferner entspricht die Pulsdauer 22 der Pulsdauer 12 und damit auch die Pausenzeit 23 der Pausenzeit 13. Das Drehsignal $A_2$ ist gegenüber dem Drehsignal $A_1$ um ein Viertel der Periode 21 bzw. 11 verschoben. Dies entspricht einem Drehwinkel von $\Delta\varphi_{signal} = 90°$.

Die Messsignale $A_1$ und $A_2$ werden an die Auswerteeinrichtung 9 übermittelt. In der Auswerteeinrichtung 9, hier umfassend eine UND-Logikeinheit 9', werden die Messsignale $A_1$ und $A_2$ überlagert. Die UND-Logikeinheit 9' liefert daraufhin ein Ausgangssignal $A_{logik}$, das in einem Diagramm 30 dargestellt ist und das eine Impulsperiode 31 aufweist, die der Impulsperiode 11 und 21 entspricht. Eine Pulsdauer 32 entspricht dabei einem Viertel der Impulsperiode 31, während eine Pausenzeit 33 folglich einem Dreiviertel der Impulsperiode 31 entspricht (Puls-Pausen-Verhältnis 25%).

Um die oben aufgeführte Phasendifferenz bzw. Phasenverschiebung von vorzugsweise einer halben Impulsperiode (bei dem Puls-Pausen-Verhältnis von 50% entspricht dies einer Phasenverschiebung von 90°) für die Impulssignale der beiden Inkrementalgeber 7, 8 im unbelasteten Zustand zu erreichen, wird ein Positionsabgleich zwischen den Gebern vorgenommen, da sich eine solche relative Einstellung der beiden Inkrementalgeber 7, 8 während der Montage nicht zuverlässig sicherstellen lässt.

Für den Positionsabgleich werden die Inkrementalgeber 7, 8 mittels einer Verstelleinrichtung derart verstellt, dass das gewünschte Puls-Pausen-Verhältnis erzielt wird. Einer der beiden Geber, z.B. der Inkrementalgeber 7, wird dazu automatisch oder manuell entlang einer tangentialen oder einer der Wellenkontur angepassten Bahn verstellt, beispielsweise entlang einer Gewindestange oder Spindel. Dabei kann er während des Verstellens den gesamten theoretischen Messbereich abfahren. Das Puls-Pausen-Verhältnis von 50 % ist in der Beschreibung beispielhaft angegeben, es kann jedes beliebige Puls-Pausen-Verhältnis eingestellt werden, solange eine aussagekräftige Auswertung der Signale erreicht wird.

In einem weiteren Diagramm 40 ist das Ausgangssignal $A_{logik}$ in den Extrempositionen $A_{min}$ und $A_{max}$ während des Verstellens der Inkrementalgeber 7, 8 beim Abfahren des gesamten theoretischen Messbereichs dargestellt. Die gestrichelte Linie stellt das Ausgangssignal $A_{min}$ und die durchgezogene Linie stellt das Ausgangssignal $A_{max}$ und damit die Grenze der Einstellung dar. Nach dem zuvor beschriebenen Positionsabgleich wird ein in-situ Kalibrierverfahren durchgeführt, um eine Nulllastphasenverschiebung bzw. einen Nullpunktsabgleich der Drehmomentmessvorrichtung und einen Steifigkeitsfaktor K zu bestimmen, der einen Verstärkungsfaktor bzw. eine Steigung der Drehmomentenmesskennlinie des Antriebsstranges bzw. eine Steifigkeit des Antriebsstrangs berücksichtigt.

Vor einer Kalibrierung der Drehmomentmessvorrichtung sollte der Antriebsstrang der Windenergieanlage seine Nennbetriebstemperatur erreicht haben. Dies kann z.B. durch einen ausreichend langen Betrieb der Windenergieanlage ohne Verwendung der Drehmomentmessvorrichtung erreicht werden. Dies ist ohne Einschränkungen durchführbar, da die zusätzliche Drehmomentsensorik das Anlagenverhalten zwar verbessert, jedoch für den Betrieb nicht zwangsläufig notwendig ist.

Für eine Bestimmung der Nulllastphasenverschiebung wird über die Betriebsführung der Windenergieanlage diese bei Betriebsbedingungen unterhalb der Nennwindgeschwindigkeit, vorzugsweise unter Schwachwindbedingungen in den Trudelbetriebsbereich, d.h. nichtproduktiven Betrieb gebracht. Die Abbremsung der Anlage in den Trudeldrehzahlbereich kann aktiv über die Pitchverstellung der Rotorblätter durchgeführt werden. In diesem Betriebsbereich geht die Anlage vom Netz, d.h. der Generator wird nicht "bestromt" und entwickelt daher auch kein Drehmoment $M_{Gen.}(t)=0$, wobei dieser Zustand eine erforderliche Randbedingung ist. Die Blätter der Anlage befinden sich dann vollständig in Fahnenstellung, bei der der Pitchwinkel ungefähr 90° beträgt. Somit entwickelt der Rotor kein positives Antriebsmoment mehr, ein aerodynamische Bremsmoment $M_{Rot.}(t)\sim0$ hingegen ist aktiv, jedoch wird dies mit abnehmender Drehzahl exponentiell kleiner.

Nach der Abschaltung des Generators werden im Bereich sehr kleiner Drehzahlen (zwischen 3 und 1 rpm) die von der Drehmomentmessvorrichtung kontinuierlich gelieferten Messwerte über der Drehzahl aufgezeichnet. In der Auswerteeinrichtung 9 werden die aufgezeichneten Messwerte überlagert und es wird eine zeitlich gemittelte Nulllastphasenverschiebung $A(t)_{Brems}$ zwischen dem Ausgangssignal des ersten Inkrementalgebers 7 und des zweiten Inkrementalgebers 8 für die Bestimmung des Nullpunktes der Drehmomentmessvorrichtung ermittelt. Die ermittelte Nulllastphasenverschiebung wird als Nullpunkt der Drehmomentmessvorrichtung in der Auswerteeinrichtung gespeichert.

Diese Messung kann auch beim Hochlauf der Anlage bei Schwachwind im Trudelbetrieb zum Ermitteln einer Nulllastphasenverschiebung $A(t)_{Hoch}$ wiederholt werden, ebenfalls bei abgeschaltetem Generator, wobei sie vorzugsweise im gleichen Rotordrehzahlbereich durchgeführt wird (1-3rpm). Die Blätter werden dabei von der Betriebsführung sehr langsam 1°/min. aus der Fahnenstellung in Richtung Nennposition bewegt, um den Einfluss von Beschleunigungsmomenten $M_{Rot.}(t)\sim0$ zu minimieren. Es wird dann der Mittelwert der gemittelten Messwerte der beiden Versuche (Brems-, Hochlauf) gebildet

$$A_{Null} = (\overline{A(t)_{Brems}} + \overline{A(t)_{Hoch}})/2$$

und die Nulllastphasenverschiebung, bzw. der durch diese repräsentierte Nullpunkt der Drehmomentmesskennlinie entsprechend angepasst und in der Auswerteeinrichtung gespeichert.

Für eine genaue Bestimmung der Nulllastphasenverschiebung ist es vorteilhaft, dass beide Versuche direkt im Anschluss durchgeführt werden. Gegebenenfalls können diese Versuche mehrmals wiederholt werden.

Im Folgenden wird die Ermittlung des Steifigkeitsfaktors K bzw. des Verstärkungsfaktors oder der Steigung der Drehmomentmesskennlinie der Drehmomentmessvorrichtung beschrieben. Diese Ermittlung wird vorzugsweise im Volllastbetrieb, d.h. im Nennbetrieb der Anlage durchgeführt, um eine möglichst gute Messgenauigkeit über den gesamten Drehmomentmessbereich zu erhalten. In diesem Betriebsbereich wird das Generatordrehmoment von der Anlagenbetriebsführung/-regelung konstant gehalten. Die Rotordrehzahl wird aktiv über die Rotorblattverstellung (Pitch) auf Anlagennenndrehzahl geregelt. Aufgrund der relativ trägen Charakteristik der Pitchregelung schwankt jedoch die Rotordrehzahl in einem Bereich von i.d.R. +/-10% um die Nenndrehzahl, so dass dynamische Brems- und Beschleunigungsdrehmomentanteile die Kalibrierung der Drehmomentmessvorrichtung stören könnten. Daher wird ein längerer Messzeitraum von mehreren Minuten, vorzugsweise bis maximal 10 min, gewählt. Während dieses Messzeitraums soll sich das Generatordrehmoment nicht verändern, d.h. die Anlage muss während des gesamten Messzeitraumes in ihrem Nennleistungsbereich arbeiten.

Das Generatordrehmoment entspricht dem Luftspaltmoment, dieses lässt sich direkt messtechnisch nicht erfassen, sondern wird aus den gemessenen elektrischen Klemmengrößen und den Generatorparametern rechnerisch von dem in den Windenergieanlagen enthaltenen Umrichter ermittelt und als Signal/- Information der Anlagensteuerung "mitgeteilt". Standardmäßig benötigt der Umrichter hierfür ein Generatorrotorlagesignal oder zumindest ein Generatorrotordrehzahlsignal. Dieses kann von einem der Inkrementalgeber 7, 8 zur Verfügung gestellt oder von einem Standardgeber am Generator geliefert werden.

Die Drehmomentmessvorrichtung mit der Auswerteeinrichtung 9 gemäß Fig. 1b und einer Auswertung entsprechend Fig. 2 liefert Messsignale bezüglich einer Phasenverschiebung $\Delta\varphi$ zwischen den beiden Gebersignalen bei dem Nennbetrieb. Der zeitliche Mittelwert der die Phasenverschiebungen angebenden Messsignale der Drehmomentmessvorrichtung und die Werte des bestimmten Generatordrehmoments ergeben den Steifigkeitsfaktor

$$K = \overline{M_{Gen}} / \overline{\Delta\varphi}$$

durch den somit der zweite notwendige Kennlinienpunkt zur Festlegung der Drehmomentmesskennlinie gegeben wird, der dem Windenergieanlagen-Nennmoment entspricht. Diese Messung kann bei Bedarf beliebig oft wiederholt werden. Die Anlage sollte auch in diesem Fall ihre Nennbetriebstemperatur erreicht haben. Optional kann die Bestimmung dieses Wertes der Kennlinie auch vor der Nullpunktbestimmung durchgeführt werden.

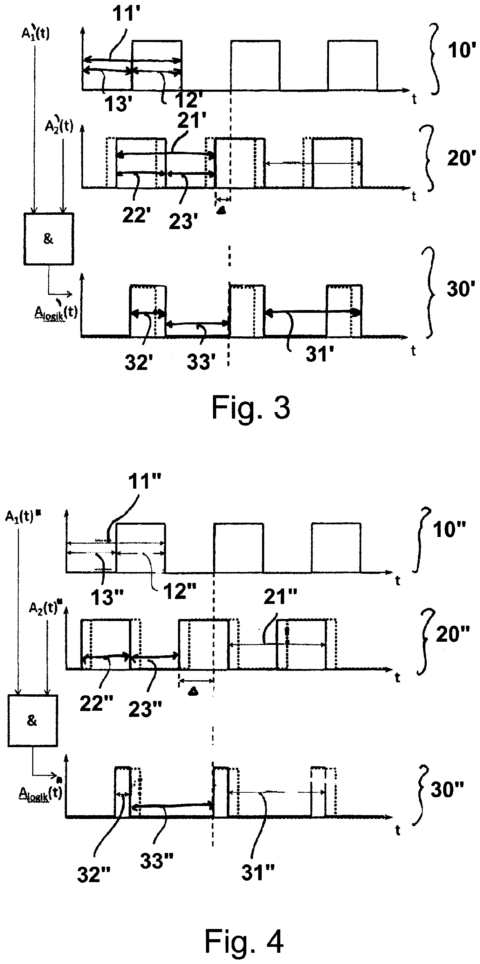

In Figur 3 sind die Ausgangssignale oder Drehsignale $A_1'$ und $A_2'$ der zwei Inkrementalgeber 7, 8 im normalen Messbetrieb unter Last der Windenergieanlage bei positiver Drehmomentrichtung dargestellt. Die Drehsignale $A_1'$ des ersten Inkrementalgebers 7 sind in dem oberen Diagramm 10' angegeben. Die Drehsignale $A_2'$ des zweiten Inkrementalgebers 8 sind im mittleren Diagramm 20' dargestellt. Der erste Inkrementalgeber 7 liefert im zweiten Messzeitraum ein Drehsignal $A_1'$ mit einer Impulsperiode 11' und einem Puls-Pausen-Verhältnis von 50 / 50. Dabei ist die Pulsdauer 12' genauso lang wie die Pausenzeit 13'. Das Drehsignal $A_2'$ weist eine Impulsperiode 21' auf, die der Impulsperiode 11' entspricht und ebenfalls ein Puls-Pausen-Verhältnis von 50 % aufweist. Ferner entspricht die Pulsdauer 22' der Pulsdauer 12' und damit auch die Pausenzeit 23' der Pausenzeit 13'. Gepunktet gezeigt ist das Signal $A_2$ nach Fig. 2. Das Drehsignal $A_2'$ eilt dem Drehsignal $A_1'$ um 15 % der Impulsperiode 21 bzw. 11 voraus. Dies entspricht einem Drehwinkel $\Delta\varphi_{signal}$ von 54°.

Die Ausgangssignale $A_1'$ und $A_2'$ werden in der UND-Logik überlagert, die ein Ausgangssignal $A_{Logik}'$ mit einer Impulsperiode 31' liefert, wobei auch hier das Signal $A_{Logik}$. nach Fig. 2 gepunktet dargestellt ist. Die Pulsdauer 32' ergibt sich zu

$$A((n - 1)T, nT) = T_{high}/(T_{high} + T_{low}) = 0{,}35$$

d.h. 35 % der Impulsperiode 31'. Das Ausgangssignal $A_{Logik}'$ beinhaltet somit sowohl eine Phasenverschiebung, die aus dem auf den Rotor aufgebrachten Drehmoment unter Last resultiert sowie eine Phasenverschiebung, die bereits während eines Nulllast-Betriebs der Windenergieanlage vorherrscht. Aus dem Ausgangssignal $A_{Logik}'$ lässt sich mit den Größen nach Fig. 2 der Verdrehwinkel der Welle $\Delta\varphi_{Welle}$, der durch das Lastdrehmoment verursacht wird, bestimmen zu

$$\Delta\varphi_{Welle} = (A((n - 1)T, nT) - 0{,}25) / 0{,}25 \cdot 90°/x = 36°/x$$

wobei x die Anzahl der Impulse pro Umdrehung ist. Das Drehmoment kann aus der Drehmomentkennlinie in Abhängigkeit der Phasenverschiebung bestimmt werden.

In Figur 4 sind Drehsignale $A_1''$ und $A_2''$ der zwei Inkrementalgeber 7, 8 im Messbetrieb unter Last mit negativer Drehmomentrichtung dargestellt. Das auf die Rotorhautwelle wirkende Drehmoment entspricht dem Drehmoment der Figur 3, ist in Figur 4 jedoch, wie erwähnt, als negativ drehend definiert. Das Drehsignal $A_1''$ des ersten Inkrementalgebers

7, das dem Ausgangssignal bzw. Drehsignal $A_1'$ entspricht, ist in dem Diagramm 10'' dargestellt und das Drehsignal $A_2''$ des zweiten Inkrementalgebers 8 ist im Diagramm 20'' angegeben. Das Drehsignal $A_2''$ entspricht dem Drehsignal $A_2'$, ist aber entgegengesetzt zu $A_2'$ verschoben. Die Zeitdifferenz zwischen den Signalen $A_1''$ und $A_2''$ ist $\Delta T = 0{,}35\ T_{imp}$, was einem Winkel $\Delta\varphi_{signal}$ von 126° entspricht. Die Ausgangssignale $A_1''$ und $A_2''$ werden in der UND-Logik überlagert, die ein Ausgangssignal $A_{Logik}'$ mit einer Impulsperiode 31'' liefert, wobei auch hier das Signal $A_{Logik}$ nach Fig. 2 gepunktet dargestellt ist. Die Pulsdauer 32'' ergibt sich zu

$$A((n-1)T,\ nT) = T_{high}/(T_{high} + T_{low}) = 0{,}15$$

d.h. 15 % der Impulsperiode 31''. Die Pulsdauer 32'' beträgt dabei 15 % der Impulsperiode 31''. Das Ausgangssignal $A_{Logik}''$ repräsentiert eine Phasenverschiebung, die aus dem auf den Rotor aufgebrachten Drehmoment unter Last resultiert sowie eine Phasenverschiebung, die auch während eines Nulllast-Betriebs der Windenergieanlage vorherrscht. Aus dem Ausgangssignal $A_{Logik}'$ lässt sich mit den Größen nach Fig. 2 der Verdrehwinkel der Welle $\Delta\varphi_{Wene}$, der durch das Lastdrehmoment verursacht wird, bestimmen zu

$$\Delta\varphi_{Welle} = (A((n-1)T,\ nT) - 0{,}25)\ /\ 0{,}25 \cdot 90°/x = -36°/x$$

wobei x die Anzahl der Impulse pro Umdrehung ist.

Zum Messen des Drehmoments der Rotorhauptwelle der Windenergieanlage 1 werden beliebige Ausgangssignale $A_{Mess1}$ und $A_{Mess2}$ der beiden Inkrementalgeber, wie unter Fig. 3 und Fig. 4 erläutert, ausgewertet. Dabei werden die Drehsignale der Inkrementalgeber 7, 8 durch die UND-Logikschaltung überlagert, die ein die Phasenverschiebung zwischen den zwei Drehsignalen repräsentierendes Signal $A_{MessLogik}$ liefert. Zur Ermittlung eines momentanen Drehmoments wird von diesem aktuellen Messsignal $A_{MessLogik}$ das Signal der Nullpunktsbestimmung $A_{null}$ addiert und das Ergebnis mit dem Steifigkeitsfaktor K multipliziert:

$$M(t) = A_{MessLogik}(t) * K + A_{null} * K.$$

Das Drehmomentsignal wird beispielsweise zur Regelung der Windenergieanlage verwendet.

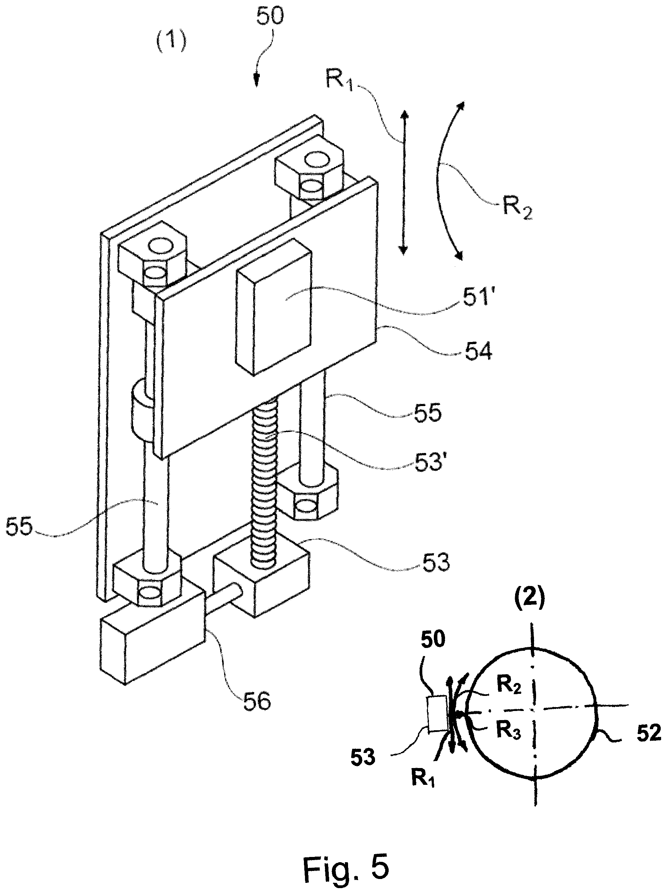

Figur 5 zeigt eine Verstelleinrichtung 50 zum Verstellen eines Inkrementalgebers 51 relativ zu einer Welle 52. Eine Geberscheibe oder ein Geberband ist fest mit der Welle 52 verbunden. Der Inkrementalgeber 51 weist einen Sensor 51' zum Abtasten der Geberscheibe oder des Geberbands auf. Der Inkrementalgeber 51 kann beispielsweise photoelektrisch oder magnetisch die Geberscheibe abtasten. Es können auch Zahnräder als Geberscheiben verwendet werden.

In Figur 5 (1) ist die Verstelleinrichtung 50 dargestellt, während in Figur 5 (1) ein Querschnitt durch die Welle 52 und die Anordnung der Verstelleinrichtung 50 relativ zur Welle 52 gezeigt ist. Die Verstelleinrichtung 50 umfasst einen Linearantrieb 53 mit einer Spindel 53', an der ein Schieber 54 angeordnet ist. An dem Schieber ist der Inkrementalgebersensor 51' befestigt. Ferner umfasst die Verstelleinrichtung zwei Führungsschienen 55, entlang derer der Schieber bewegbar ist. Mit einem Elektroantrieb 56 kann die Spindel 53' des Linearantriebs 53 derart angetrieben werden, dass der Schieber entlang der Spindel in einer Richtung $R_1$ verfahrbar ist. In Figur 5 (2) ist dargestellt, dass die Verstelleinrichtung 50 vorzugsweise derart angeordnet ist, dass die Richtung $R_1$ tangential zur Welle 52 verläuft, sodass der Inkrementalgebersensor 51' tangential zur Welle 52 verstellbar ist. Ferner kann der Schieber 54 um die Spindel 53' verdreht werden, sodass eine der Wellenkontur angepasste Verstellung des Sensors 51' entlang der Richtung $R_2$ möglich ist. Der Pfeil $R_3$ beschreibt die Detektionsrichtung des Inkrementalgebersensors 51'.

Optional kann ein drehmomentmesswertgestützter Beobachter zur Anlagenregelung verwendet werden, d.h. der gemessene Drehmomentmesswert kann für ein verbessertes Anlagenmodell ein mathematisches Modell des Windenergieanlagen-Antriebsstrangs in Form eines sogenannten Beobachters verwenden. Der Beobachter kann mathematisch modellbasiert Zustände im Antriebsstrang mathematisch schätzen und der Regelung rückkoppeln. Das Drehzahlsignal vom Generatordrehzahlgeber kann zur "Stützung" des Beobachtermodells verwendet werden, damit der Beobachter nicht durch Ungenauigkeiten in der Modellierung wegdriftet und ein erwartungstreues Schätzergebnis erreicht wird. Die oben beschriebene Messeinrichtung kann durch die Signale der zwei Inkrementalgeber und insbesondere durch das Drehmomentsignal die Schätzgenauigkeit des Beobachters hinsichtlich der Genauigkeit d.h. hinsichtlich der stationären Abweichung und Dynamik (Geschwindigkeit Schätzwertkonvergenz) verbessern. Diese Beobachteranwendung ist optional und nicht zwingend notwendig, da allein durch die Messeinrichtung schon die oben genannten regelungstechnischen Vorteile erzielt werden. Mit der Einführung von Beobachtermodellen kann die Regelungsgenauigkeit nochmals verbessert werden.

**Patentansprüche**

1. Verfahren zur Drehmomentmessung im Antriebsstrang (1) einer Windenergieanlage mit zumindest zwei Inkrementalgebern (7, 8), die an zwei unterschiedlichen Positionen auf zumindest einer Welle (3) des Antriebsstrangs (1) positioniert sind und die jeweils periodische Drehsignale liefern, wobei die Phasen der Drehsignale zur Feststellung einer Phasenverschiebung ausgewertet werden und aus der Phasenverschiebung ein Drehmoment der Welle (1) ermittelt wird,

   wobei die festgestellte Phasenverschiebung in Abhängigkeit einer Nulllastphasenverschiebung ($A_{Null}$) und unter Verwendung eines Steifigkeitsfaktors K korrigiert wird, wobei vor und/oder zwischen den Drehmoment-Bestimmungen eine in-situ-Kalibrierung zum Ermitteln der Nulllastphasenverschiebung ($A_{Null}$) und des Steifigkeitsfaktors K durchgeführt wird und die in-situ-Kalibrierung den folgende Schritt umfasst:

   - Messen eines ersten Nulllast-Signals des ersten Inkrementalgebers (7) und eines zweiten Nulllast-Signals des zweiten Inkrementalgebers (8) über einen ersten Messzeitraum und Bestimmen einer zeitlich gemittelten Nulllastphasenverschiebung ($A_{Null}$) zwischen dem ersten Nulllast-Signal und dem zweiten Nulllast-Signal, wobei die Windenergieanlage während des ersten Messzeitraums unterhalb einer Nenndrehzahl betrieben wird und ein Generatordrehmoment gleich Null ist,

   wobei das Verfahren **dadurch gekennzeichnet ist, dass** die in-situ-Kalibrierung ferner den folgenden Schritt umfasst:

   - Messen eines ersten Nennlast-Signals des ersten Inkrementalgebers (7) und eines zweiten Nennlast-Signals des zweiten Inkrementalgebers (8) über einen zweiten Messzeitraum, Bestimmen einer zeitlich gemittelten Nennlastphasenverschiebung zwischen dem ersten Nennlast-Signal und dem zweiten Nennlast-Signal und Ermitteln des Steifigkeitsfaktors K in Abhängigkeit der Nennlastphasenverschiebung, wobei die Windenergieanlage während des zweiten Messzeitraums bei der Nenndrehzahl betrieben wird und das Generatordrehmoment der Windenergieanlage größer Null gehalten wird.

2. Verfahren nach Anspruch 1, **dadurch gekennzeichnet, dass** die zur Bestimmung des Drehmoments festgestellte Phasenverschiebung durch Subtraktion oder Addition der Nulllastphasenverschiebung ($A_{Null}$) und/oder durch Multiplikation mit dem Steifigkeitsfaktor K korrigiert wird.

3. Verfahren nach Anspruch 1 oder 2, **dadurch gekennzeichnet, dass** ein Generatordrehmoment während des zweiten Messzeitraums im Wesentlichen konstant gehalten wird und vorzugsweise über den zweiten Messzeitraum gemittelt wird, wobei der Steifigkeitsfaktor K durch Division durch die Nennlastphasenverschiebung ermittelt wird.

4. Verfahren nach einem der vorhergehenden Ansprüche, **dadurch gekennzeichnet, dass** der erste und/oder der zweite Messzeitraum zwischen 2 Minuten und 20 Minuten beträgt.

5. Verfahren nach Anspruch 1, 2 oder 3, **dadurch gekennzeichnet, dass** die Inkrementalgeber (7, 8) auf zwei verschiedenen Wellen (3, 5) angeordnet sind, wobei die Wellen durch ein Getriebe (4) miteinander gekoppelt sind.

6. Verfahren nach einem der vorhergehenden Ansprüche, **dadurch gekennzeichnet, dass** die Windenergieanlage zum Erreichen einer Drehzahl unterhalb einer Nenndrehzahl aus einem Windenergie-Normalbetrieb abgebremst wird, wobei die Messwerte der zwei Inkrementalgeber (7, 8) in einem Bereich vorgegebener Drehzahlen zur Bestimmung der Nulllastphasenverschiebung ($A_{Null}$) ausgewertet werden.

7. Verfahren nach einem der vorhergehenden Ansprüche, **dadurch gekennzeichnet, dass** die Windenergieanlage zum Erreichen einer Drehzahl unterhalb einer Nenndrehzahl aus einem abgeschalteten Zustand hochgefahren wird, wobei die Messwerte der zwei Inkrementalgeber (7, 8) in einem Bereich vorgegebener Drehzahlen zur Bestimmung der Nulllastphasenverschiebung ($A_{Null}$) ausgewertet werden.

8. Verfahren nach Ansprüchen 6 und 7, **dadurch gekennzeichnet, dass** eine gemittelte Nulllastphasenverschiebung ($A_{Null}$) ermittelt wird, wobei die Nulllastphasenverschiebung ($A_{Null}$), die nach einem Abbremsen der Windenergieanlage ermittelt wird und die Nulllastphasenverschiebung ($A_{Null}$), die nach Hochfahren der Anlage ermittelt wird, gemittelt werden.

9. Verfahren nach einem der vorhergehenden Ansprüche, **dadurch gekennzeichnet, dass** der erste (7) und der zweite Inkrementalgeber (8) derart angeordnet werden, dass die Messsignale der Inkrementalgeber bei Drehung der Windenergieanlage ohne Last eine Phasenverschiebung mit einem vorgegebenen Wert aufweisen, wobei der erste (7) und/oder der zweite Inkrementalgeber (8) nach deren Anordnung auf den vorgegebenen Wert abgeglichen werden.

10. Vorrichtung zur Drehmomentmessung im Antriebsstrang (1) einer Windenergieanlage, umfassend zumindest zwei Inkrementalgeber (7, 8), die an zwei unterschiedlichen Positionen auf zumindest einer Welle des Antriebsstrangs (1) positioniert sind und eine Auswerteeinrichtung (9), die mit den Inkrementalgebern verbunden ist und eingerichtet ist,

aus den Messsignalen der Inkrementalgeber (7, 8) eine Phasenverschiebung und daraus ein Drehmoment der Welle (3) zu ermitteln,
die Phasenverschiebung in Abhängigkeit einer Nulllastphasenverschiebung ($A_{Null}$) und unter Verwendung eines Steifigkeitsfaktor K zu korrigieren, und
vor und/oder zwischen den Drehmoment-Bestimmungen eine in-situ-Kalibrierung zum Ermitteln der Nulllastphasenverschiebung ($A_{Null}$) und des Steifigkeitsfaktors K durchzuführen, wobei die Auswerteeinrichtung zum Durchführen der in-situ-Kalibrierung eingerichtet ist,

- ein erstes Nulllast-Signal des ersten Inkrementalgebers (7) und ein zweites Nulllast-Signal des zweiten Inkrementalgebers (8) über einen ersten Messzeitraum zu messen und eine zeitlich gemittelte Nulllastphasenverschiebung ($A_{Null}$) zwischen dem ersten Nulllast-Signal und dem zweiten Nulllast-Signal zu bestimmen, wobei die Windenergieanlage während des ersten Messzeitraums unterhalb einer Nenndrehzahl betrieben wird und ein Generatordrehmoment gleich Null ist, und
- ein erstes Nennlast-Signal des ersten Inkrementalgebers (7) und ein zweites Nennlast-Signal des zweiten Inkrementalgebers (8) über einen zweiten Messzeitraum zu messen und eine zeitlich gemittelten Nennlastphasenverschiebung zwischen dem ersten Nennlast-Signal und dem zweiten Nennlast-Signal zu bestimmen und den Steifigkeitsfaktors K in Abhängigkeit der Nennlastphasenverschiebung zu ermitteln, wobei die Windenergieanlage während des zweiten Messzeitraums bei der Nenndrehzahl betrieben wird und das Generatordrehmoment bei Nennlast größer Null gehalten wird.

11. Vorrichtung gemäß Anspruch 10, **dadurch gekennzeichnet, dass** die Auswerteeinrichtung (9) eine Verknüpfungsschaltung (9') zum Ermitteln der Phasenverschiebung zwischen den Messsignalen der zwei Inkrementalgeber (7, 8) und eine Analysiereinheit (9") zur Feststellung der mechanischen Winkelverdrehung zwischen den zwei Inkrementalgebern (7, 8) und damit des Drehmoments umfasst.

12. Vorrichtung gemäß Anspruch 10 oder 11, **gekennzeichnet durch** eine elektromechanische Verstelleinrichtung (50), zum Verstellen einer Inkrementalgeberposition in tangentialer Richtung zur Welle (3, 5) und/oder entlang eines Umfangs der Welle (3, 5).

13. Vorrichtung gemäß einem der Ansprüche 10 bis 12, **dadurch gekennzeichnet, dass** der erste (7) und/oder der zweite Inkrementalgeber (8) auf einem magnetischen, optischen oder induktiven Messprinzip beruhen/beruht.

14. Vorrichtung gemäß einem der Ansprüche 10 bis 13, **dadurch gekennzeichnet, dass** die Inkrementalgeber (7, 8) eine Auflösung von mindestens vier Impulsen und/oder maximal 16384 Impulsen Impulsen pro Wellenumdrehung aufweisen.

15. Vorrichtung gemäß einem der Ansprüche 10 bis 14, **dadurch gekennzeichnet, dass** die Inkrementalgeber (7, 8) eine identische Auflösung aufweisen oder sich die Auflösungen um ein ganzzahliges Vielfaches voneinander unterscheiden.

**Claims**

1. A method for the torque measurement in the drive train (1) of a wind energy facility with at least two incremental encoders (7, 8) which are positioned at two different positions on at least one shaft (3) of the drive train (1) and which each provide periodic rotation signals, wherein the phases of the rotation signals are evaluated for determining a phase shift and a torque of the shaft (1) is determined from the phase shift,
wherein the determined phase shift is corrected in dependence on a zero-load phase shift ($A_{ZERO}$) and using a stiffness factor K, wherein an in-situ calibration is carried out before and/or between the torque evaluations, for determining the zero-load phase shift ($A_{ZERO}$) and the stiffness factor K, and the in-situ calibration comprises the following step:

- measuring a first zero-load signal of the first incremental encoder (7) and a second zero-load signal of the second incremental encoder (8) over a first measuring time period and determining a temporally averaged zero-load phase shift ($A_{ZERO}$) between the first zero-load signal and the second zero-load signal, wherein the wind energy facility during the first measuring time period is operated below a nominal speed and a generator torque is equal to zero,

the method being **characterized in that** the in-situ calibration further comprises the step of:

- measuring a first nominal load signal of the first incremental encoder (7) and a second nominal load signal of the second incremental encoder (8) over a second measuring time period, determining a temporally averaged nominal load phase shift between the first nominal load signal and the second nominal load signal and determining the stiffness factor K in dependence on the nominal load phase shift, wherein the wind energy facility is operated at the nominal speed during the second measuring time period and the generator torque of the wind energy facility is kept larger than zero.

2. A method according to claim 1, **characterised in that** the phase shift which is ascertained for determining the torque is corrected by way of subtraction or addition of the zero-load phase shift ($A_{ZERO}$) and/or by multiplication by the stiffness factor K.

3. A method according to claim 1 or 2, **characterised in that** a generator torque is kept essentially constant during the second measuring time period and is preferably averaged over the second measuring time period, wherein the stiffness factor K is determined by division by the nominal load phase shift.

4. A method according to one of the preceding claims, **characterised in that** the first and/or the second measuring time period is between 2 minutes and 20 minutes.

5. A method according to claim 1, 2 or 3, **characterised in that** the incremental encoders (7, 8) are arranged on two different shafts (3, 5), wherein the shafts are coupled to one another by way of a gear (4).

6. A method according to one of the preceding claims, **characterised in that** the wind energy facility is braked from a wind energy normal operation for reaching a speed below the nominal speed, wherein the measurement values of the two incremental encoders (7, 8) are evaluated in a region of predefined speeds for determining the zero-load phase shift ($A_{ZERO}$).

7. A method according to one of the preceding claims, **characterised in that** the wind energy facility is braked from a shut down state for reaching a speed below the nominal speed, wherein the measurement values of the two incremental encoders (7, 8) are evaluated in a region of predefined speeds for determining the zero-load phase shift ($A_{ZERO}$).

8. A method according to claims 6 and 7, **characterised in that** an averaged zero-load phase shift ($A_{ZERO}$) is determined, wherein the zero-load phase shift ($A_{ZERO}$) which is determined after a braking of the wind energy facility and the zero-load phase shift ($A_{ZERO}$) which is determined after starting up the facility are averaged.

9. A method according to one of the preceding claims, **characterised in that** the first (7) and the second incremental encoder (8) are arranged in a manner such that the measurement signals of the incremental encoders given a rotation of the wind energy facility without load have a phase shift with a predefined value, wherein the first (7) and/or the second incremental encoder (8) are adjusted to the predefined value after their arrangement.

10. A device for the torque measurement in the drive train (1) of a wind energy facility, comprising at least two incremental encoders (7, 8) which are positioned at two different positions on at least one shaft of the drive train (1) and an evaluation device (9) which is connected to the incremental encoders and is configured

    to determine a phase shift from the measurement signals of the incremental encoders (7, 8) and from this to determine a torque of the shaft (3),

to correct the phase shift in dependence on a zero-load phase shift ($A_{ZERO}$) and using a stiffness factor K, and to carry out an in-situ calibration before and/or between the torque evaluations, for determining the zero load phase shift ($A_{ZERO}$) and the stiffness factor K, wherein the evaluation device for carrying out the in-situ calibration is configured

- to measure a first zero-load signal of the first incremental encoder (7) and a second zero-load signal of the second incremental encoder (8) over a first measuring time period and to determine a temporally averaged zero-load phase shift ($A_{ZERO}$) between the first zero load signal and the second zero-load signal, wherein the wind energy facility during the first measuring time period is operated below a nominal speed and a generator torque is equal to zero, and
- to measure a first nominal load signal of the first incremental encoder (7) and a second nominal load signal of the second incremental encoder (8) over a second measuring time period and to determine a temporally averaged nominal load phase shift between the first nominal load signal and the second nominal load signal and to determine the stiffness factor K in dependence on the nominal load phase shift, wherein the wind energy facility during the second measuring time period is operated at the nominal speed and the generator torque at nominal load is kept greater than zero.

11. A device according to claim 10, **characterised in that** the evaluation device (9) comprises a logic circuit (9') for determining the phase shift between the measurement signals of the two incremental encoders (7, 8), and an analysing unit (9") for determining the mechanical angle twist between the two incremental encoders (7, 8) and thus the torque.

12. A device according to claim 10 or 11, **characterised by** an electromechanical adjusting device (50) for adjusting an incremental encoder position in the tangential direction to the shaft (3, 5) and/or along a circumference of the shaft (3, 5).

13. A device according to one of the claims 10 to 12, **characterised in that** the first (7) and/or the second incremental encoder (8) is/are based on a magnetic, optical or inductive measuring principle.

14. A device according to one of the claims 10 to 13, **characterised in that** the incremental encoders (7, 8) have a resolution of at least four impulses and/or maximally 16384 impulses per shaft revolution.

15. A device according to one of the claims 10 to 14, **characterised in that** the incremental encoders (7, 8) have an identical resolution or the resolutions differ from one another by an integer multiple.

**Revendications**

1. Procédé de mesure de couple dans la chaîne cinématique (1) d'une installation éolienne comprenant au moins deux codeurs incrémentaux (7, 8) qui sont positionnés dans deux positions différentes sur au moins un arbre (3) de la chaîne cinématique (1) et qui délivrent chacun des signaux de rotation périodiques, dans lequel les phases des signaux de rotation sont évaluées pour constater un déphasage et un couple de l'arbre (1) est déterminé à partir du déphasage,
dans lequel le déphasage constaté est corrigé en fonction d'un déphasage à charge nulle ($A_{NULL}$) et à l'aide d'un facteur de rigidité K, dans lequel un étalonnage in situ est effectué avant et/ou entre les déterminations de couple pour déterminer le déphasage à charge nulle ($A_{NULL}$) et le facteur de rigidité K, et l'étalonnage in situ comprend l'étape suivante :

- mesurer un premier signal à charge nulle du premier codeur incrémental (7) et un second signal à charge nulle du second codeur incrémental (8) sur une première période de mesure et déterminer un déphasage à charge nulle moyenné dans le temps ($A_{NULL}$) entre le premier signal à charge nulle et le second signal à charge nulle, dans lequel l'installation éolienne fonctionne en dessous d'une vitesse de rotation nominale pendant la première période de mesure et un couple de génératrice est égal à zéro,

dans lequel le procédé est **caractérisé en ce que** l'étalonnage in situ comprend en outre l'étape suivante :

- mesurer un premier signal à charge nominale du premier codeur incrémental (7) et un second signal à charge nominale du second codeur incrémental (8) sur une seconde période de mesure, déterminer un déphasage à charge nominale moyenné dans le temps entre le premier signal à charge nominale et le second signal à charge nominale et déterminer le facteur de rigidité K en fonction du déphasage à charge nominale, dans lequel l'installation éolienne fonctionne à la vitesse de rotation nominale pendant la seconde période de mesure et le couple de génératrice de l'installation éolienne est maintenu supérieur à zéro.

2.  Procédé selon la revendication 1, **caractérisé en ce que** le déphasage constaté pour déterminer le couple est corrigé par soustraction ou addition du déphasage à charge nulle ($A_{NULL}$) et/ou par multiplication par le facteur de rigidité K.

3.  Procédé selon la revendication 1 ou 2, **caractérisé en ce qu'**un couple de génératrice est maintenu sensiblement constant pendant la seconde période de mesure et est de préférence moyenné sur la seconde période de mesure, dans lequel le facteur de rigidité K est déterminé par division par le déphasage à charge nominale.

4.  Procédé selon l'une quelconque des revendications précédentes, **caractérisé en ce que** la première et/ou la seconde période de mesure est comprise entre 2 minutes et 20 minutes.

5.  Procédé selon la revendication 1, 2 ou 3, **caractérisé en ce que** les codeurs incrémentaux (7, 8) sont agencés sur deux arbres différents (3, 5), dans lequel les arbres sont couplés l'un à l'autre par une transmission (4).

6.  Procédé selon l'une quelconque des revendications précédentes, **caractérisé en ce que** l'installation éolienne est ralentie pour atteindre une vitesse de rotation inférieure à une vitesse de rotation nominale de fonctionnement éolien normal, dans lequel les valeurs mesurées des deux codeurs incrémentaux (7, 8) sont évaluées dans une plage de vitesses de rotation prédéterminées pour déterminer le déphasage à charge nulle ($A_{NULL}$).

7.  Procédé selon l'une quelconque des revendications précédentes, **caractérisé en ce que** l'installation éolienne est démarrée à partir d'un état éteint pour atteindre une vitesse de rotation inférieure à une vitesse de rotation nominale, dans lequel les valeurs mesurées des deux codeurs incrémentaux (7, 8) sont évaluées dans une plage de vitesses de rotation prédéterminées pour déterminer le déphasage à charge nulle ($A_{NULL}$).

8.  Procédé selon les revendications 6 et 7, **caractérisé en ce qu'**un déphasage à charge nulle moyenné ($A_{NULL}$) est déterminé, dans lequel le déphasage à charge nulle ($A_{NULL}$) qui est déterminé après le ralentissement de l'installation éolienne et le déphasage à charge nulle ($A_{NULL}$) qui est déterminé après le démarrage de l'installation, sont moyennés.

9.  Procédé selon l'une quelconque des revendications précédentes, **caractérisé en ce que** les premier (7) et second codeurs incrémentaux (8) sont agencés de telle manière que les signaux de mesure des codeurs incrémentaux présentent un déphasage d'une valeur prédéterminée lorsque l'installation éolienne tourne sans charge, dans lequel le premier (7) et/ou le second codeur incrémental (8) sont ajustés à la valeur prédéterminée après leur agencement.

10. Dispositif de mesure de couple dans une chaîne cinématique (1) d'une installation éolienne, comprenant au moins deux codeurs incrémentaux (7, 8) positionnés dans deux positions différentes sur au moins un arbre de la chaîne cinématique (1) et un dispositif d'évaluation (9) qui est relié aux codeurs incrémentaux et est configuré pour

    déterminer un déphasage à partir des signaux de mesure des codeurs incrémentaux (7, 8) et un couple de l'arbre (3) à partir de celui-ci,
    corriger le déphasage en fonction d'un déphasage à charge nulle ($A_{NULL}$) et en utilisant un facteur de rigidité K, et effectuer un étalonnage in situ avant et/ou entre les déterminations de couple pour déterminer le déphasage à charge nulle ($A_{NULL}$) et le facteur de rigidité K, dans lequel le dispositif d'évaluation est configuré pour effectuer l'étalonnage in situ,

    - mesurer un premier signal à charge nulle du premier codeur incrémental (7) et un second signal à charge nulle du second codeur incrémental (8) sur une première période de mesure et déterminer un déphasage à charge nulle moyenné dans le temps ($A_{NULL}$) entre le premier signal à charge nulle et le second signal à charge nulle, dans lequel l'installation éolienne fonctionne en dessous d'une vitesse de rotation nominale pendant la première période de mesure et un couple de génératrice est égal à zéro, et
    - mesurer un premier signal à charge nominale du premier codeur incrémental (7) et un second signal à charge nominale du second codeur incrémental (8) sur une seconde période de mesure et déterminer un déphasage à charge nominale moyenné dans le temps entre le premier signal à charge nominale et le second signal à charge nominale, et déterminer le facteur de rigidité K en fonction du déphasage à charge nominale, dans lequel l'installation éolienne fonctionne à la vitesse de rotation nominale pendant la seconde période de mesure et le couple de génératrice est maintenu supérieur à zéro à la charge nominale.

**11.** Dispositif selon la revendication 10, **caractérisé en ce que** le dispositif d'évaluation (9) comprend un circuit logique (9') pour déterminer le déphasage entre les signaux de mesure des deux codeurs incrémentaux (7, 8) et une unité d'analyse (9") pour constater la rotation angulaire mécanique entre les deux codeurs incrémentaux (7, 8), et ainsi le couple.

**12.** Dispositif selon la revendication 10 ou 11, **caractérisé par** un dispositif de réglage électromécanique (50) pour régler une position de codeur incrémental dans une direction tangentielle à l'arbre (3, 5) et/ou le long d'une circonférence de l'arbre (3, 5).

**13.** Dispositif selon l'une quelconque des revendications 10 à 12, **caractérisé en ce que** le premier (7) et/ou le second codeur incrémental (8) est/sont basé(s) sur un principe de mesure magnétique, optique ou inductif.

**14.** Dispositif selon l'une quelconque des revendications 10 à 13, **caractérisé en ce que** les codeurs incrémentaux (7, 8) présentent une résolution d'au moins quatre impulsions et/ou d'au maximum 16 384 impulsions par rotation d'arbre.

**15.** Dispositif selon l'une quelconque des revendications 10 à 14, **caractérisé en ce que** les codeurs incrémentaux (7, 8) présentent une résolution identique ou les résolutions diffèrent entre elles d'un multiple entier.

1

9

2

3 5

4 6

7

8'

8

Fig. 1a

9

A₁

9' 9"

A₂

A₉

Fig. 1b

$A_1(t)$

11

13   12

10

$A_2(t)$

21

23   22

20

$\Delta T_{Signal} = \frac{1}{4} T_{Imp.}$

$\Rightarrow \Delta\varphi_{Signal} = 90°$

&

$A_{logik}(t)$

Jeweils für eine Impulsperiode berechnet:

$$A\big((n-1)T, nT\big) = \frac{T_{high}}{T_{high} + T_{low}} = 0{,}5$$

Signal der Logikauswertung nach Geberpositionsabgleich und ohne Wellendrehmoment

$A_{logik}(t)$

32   31

$\Delta T_{Logik} = \frac{1}{4} T_{Imp.}$

$\Rightarrow \Delta\varphi_{Welle} = 0°$

33

30

$A_{logik}(t)$

40

$A_{max}$   $A_{min}$

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2017000949 A1
- DE 102013227055 A1

- EP 2072984 A2
- US 2012067138 A1

**In der Beschreibung aufgeführte Nicht-Patentliteratur**

- **S.E. BELADI.** Experiment Two (2) Torsional testing of Circular Shafts. *Mechanics of Materials Lab,* 06. Februar 2015